# EUROPEAN PATENT SPECIFICATION

(11) **EP 2 623 876 B1**
(45) Date of publication and mention of the grant of the patent: **27.07.2022**
(21) Application number: 12199467.7
(22) Date of filing: 27.12.2012
(51) Int. Cl.: F24F 1/38, F04D 25/08, F24F 1/40

(54) **Air conditioner**
Klimaanlage
Climatiseur

(30) Priority: 31.01.2012 KR 20120009653
(43) Date of publication of application: 07.08.2013
(73) Proprietor: LG Electronics Inc., Seoul 150-721 (KR)
(72) Inventor: Oh, Siyoung, 641-110 Kyungsangnam-do (KR); Choi, Song, 641-110 Kyungsangnam-do (KR); Sa, Yongcheol, 641-110 Kyungsangnam-do (KR); Choi, Seokho, 641-110 Kyungsangnam-do (KR)
(74) Representative: Vossius & Partner Patentanwälte Rechtsanwälte mbB

(56) References cited:
- EP-A1- 1 953 465
- EP-A2- 2 056 028
- WO-A1-2011/052317
- CN-A- 1 959 245
- KR-A- 20070 042 023
- US-A- 6 074 182

## Description

The present invention relates to an air conditioner, and more particularly, to an air conditioner installed in an exterior of a room.

US 6 074 182 A relates to a direct drive cooling fan that employs a X-shaped mounting chassis to mount the drive motor. The fan comprises a parallelepiped housing enclosing an internal subframe securing a drive motor and a propeller. A reinforcing edge circumscribes the housing front and rear to facilitate guard coupling. The subframe comprises two parallel elongated brackets, each formed of channel material. Each strut comprises several regularly spaced apart follower slots to which the X-shaped mounting chassis is mounted. The mounting chassis comprises a pair of complimentary brackets welded to opposite sides the drive motor shell. The brackets comprise a curved, interior cradle that flushly mates with the circumferential periphery of the drive motor. The brackets have wings at either end of the cradle terminating in tabs laying parallel with the subframe brackets. An attachment hole on each tab attaches the mounting chassis to the subframe brackets.

CN 1 959 245 A relates to motor support on an outdoor unit of air conditioner prepared to form a first top unit by punching and opening up middle of slab then folding it towards to front and forming the second top unit by punching and opening up middle of the first unit then folding it towards to back; forming said slab by process of blanking, hole punching, shape-pressing, folding and turning-up.

EP 1 953 465 A1 relates to an outdoor unit of an air conditioner. The outdoor unit includes an outdoor heat exchanger, a fan, a motor for driving the fan, and a motor support table for supporting the motor. The fan blows air to the outdoor heat exchanger and promotes heat exchange between refrigerant and air. The motor support table is provided with a rectifying member, and the rectifying member deflects air flowing toward the motor support table in a predetermined direction.

In general, an air conditioner is a device of processing suction air and supplying the processed suction air to a building or a room so that indoor air maintains a comfortable condition, and is classified into a window type and a separate or split type.

The separate or slit type air conditioner includes an indoor unit cooling or heating indoor air through heat exchange between a refrigerant and the indoor air, and an outdoor unit cooling or heating outdoor air through heat exchange between the refrigerant and the outdoor air.

The outdoor unit includes a blowing fan flowing outdoor air for exchanging heat with a refrigerant circulating via an outdoor heat exchanger and a fan motor driving the blowing fan.

The fan motor is fixed and mounted to a motor mount which is fixed to the inside of the outdoor unit.

The present invention has been made in an effort to solve the above problems, and the present invention provides an air conditioner which reduces noise of a blowing fan.

The invention is specified in claim 1.

According to an aspect of the present invention, there is provided air conditioner according to claim 1.

The location of the at least one cut our part is preferably such that, when viewed along the rotational axis of the blowing fan, the areal surface of rotation of the blowing fan overlaps with at least a part of the at least one cut part.

The motor mount includes a top surface in which the at least one cut parts are provided, a bottom surface spaced from the top surface, and a side surface connecting one side of the bottom surface to one side of the top surface.

A coupling part coupling the fan motor is provided in the motor mount.

The cut parts are provided at opposite sides of the coupling part.

The cut parts include a first cut part and a second cut part.

The second cut part is longer than the first cut part.

The motor mount may include a first motor mount and a second motor mount supporting the fan motor on two sides thereof, respectively.

The first motor mount and the second motor mount may be provided parallel to each other.

The first cut part formed in the first motor mount and the first cut part formed in the second motor mount are provided diagonally with respect to the axis of the fan motor, and the second cut part formed in the first motor mount and the second cut part formed in the second motor mount are provided diagonally with respect to the axis of the fan motor.

The air passage formed at the first motor mount may be disposed opposite to one side of the fan motor, and the air passage formed at the second motor mount may faces the opposit side of the fan motor.

The air conditioner may further comprise a chassis frame supporting both ends of the motor mount.

Coupling parts may be formed at both ends of the motor mount so that the motor mount is coupled and supported to the chassis frame.

The air conditioner may further comprise at least one strength reinforcing part in the form of a protrusion or indentation is provided in at least one surface of the motor mount.

A length of the at least one strength reinforcing part may be equal to or greater than a length of the cut parts.

The at least one strength reinforcing part is provided in the side surface, in the bottom surface, or in both the side surface and the bottom surface of the motor mount.

The at least one strength reinforcing part may extend from the first cut part to the second cut part.

The present invention will become more fully understood from the detailed description given herein below and the accompanying drawings, which are given by illustration only, and thus are not limitative of the present invention, and wherein:
FIG. 1 is a perspective view illustrating an air conditioner according to an exemplary embodiment of the present invention;
FIG. 2 is an exploded perspective view of FIG. 1;
FIG. 3 is a view illustrating a blowing fan, a fan motor, and a motor mount shown in FIG. 2;
FIGS. 4 and 5 are views illustrating a motor mount shown in FIG. 3;
FIG. 6 is a plan view illustrating another example of a blowing fan shown in FIG. 3; and
FIG. 7 is a front view of FIG. 6.

Hereinafter, exemplary embodiments according to the present invention will be described in detail with reference to the accompanying drawings. The present invention may, however, be embodied in many different forms and should not be construed as limited to the example embodiments set forth herein. Rather, these example embodiments are provided so that this description will be thorough and complete, and will fully support the claims.

The same reference numbers are used throughout the drawings to refer to the same or like parts. Detailed descriptions of well-known functions and structures incorporated herein may be omitted to avoid obscuring the subject matter of the present invention.

Hereinafter, an air conditioner according to exemplary embodiments according to the present invention will be described in detail with reference to the accompanying drawings.

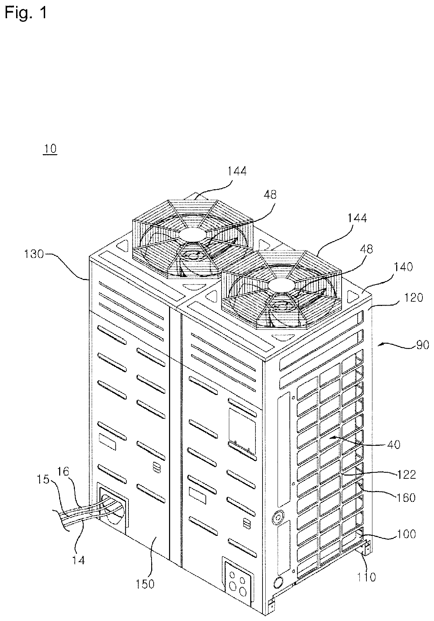

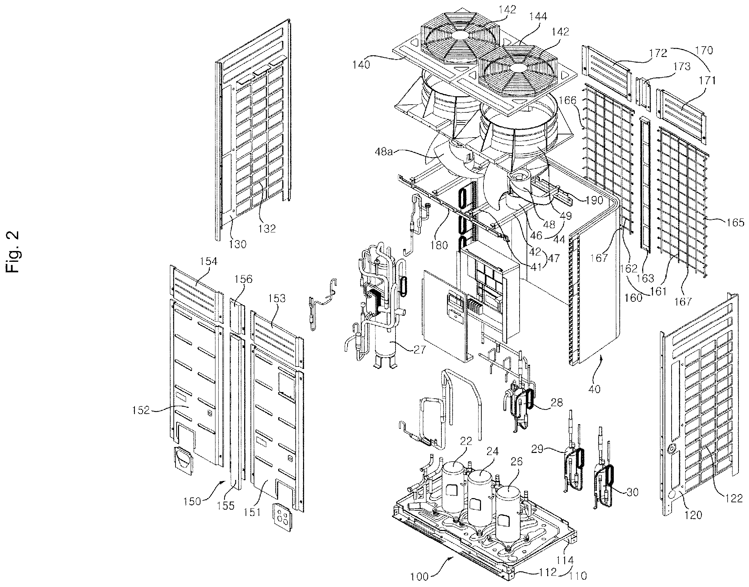

FIG. 1 is a perspective view illustrating an air conditioner according to an exemplary embodiment of the present invention, and FIG. 2 is an exploded perspective view of FIG. 1.

Referring to FIGS. 1 and 2, the air conditioner according to an embodiment of the present invention is an outdoor unit 10 installed in an exterior of a room, and may be connected to an indoor unit (not shown) installed in an interior of the room through refrigerant pipes 14, 15, and 16.

Compressors 22, 24, and 26, an accumulator 27, oil separators 28, 29, and 30, a heat exchanger 40, and a blower 44 are provided inside a case 90 of the outdoor unit 10.

The case 90 forms an outer appearance of the outdoor unit 10, and includes a base fan 100, a left panel 120, a right panel 130, a top panel 140, a front panel 150, a suction grill 160, and a rear panel 170.

The base fan 100 forms an outer appearance of a bottom surface of the outdoor unit 10, and the compressors 22, 24, and 26, the oil separators 28, 29, and 30, the accumulator 27, and the heat exchanger 40 are provided in an upper side of the base fan 100.

A plurality of legs 110 are spaced apart from each other in a lower side of the base fan 100, and may support the base fan 100 to be spaced apart from the ground.

The legs 110 may integrally protrude from the base fan 100. The lags 110 may be manufactured separately from the base fan 100 and then be coupled by the base fan 100 and a coupling member such as a screw.

The legs 110 include a front leg 112 longitudinally provided in a lower side of a front portion of the base fan 100 left and right, and a rear leg 114 longitudinally provided in a lower side of a rear portion of the base fan 100 left and right.

The left panel 120 forms an outer appearance of a left side of the outdoor unit 10. The left panel 120 is coupled to a left side of the base fan 100 and a left grill 122 is provided such that outdoor air may be sucked in the outdoor unit 10.

The right panel 130 forms an outer appearance of a right side of the outdoor unit 10. The right panel 130 is coupled to a right side of the base fan 100 and a right grill 132 is provided such that outdoor air may be sucked in the outdoor unit 10.

A top panel 140 forms an outer appearance of a top surface of the outdoor unit 10. The top panel 140 is coupled to upper sides of the left panel 120 and the right panel 130, and a discharge hole 142 is formed in the top panel 140 and air blown from the blower 44 flows through the discharge hole 142.

A discharge grill 144 disposed in an upper side of the discharge hole 142 is provided in the top panel 140.

The front panel 150 forms an outer appearance of a front surface of the outdoor unit 10. The front panel 150 is provided in front directions of the base fan 100, the left panel 120, a right panel 130, and the top panel 140, and a plurality of holes are formed in the front panel 150 such that outdoor air may be sucked in the outdoor unit 10.

The front panel 150 includes lower front panels 151 and 152 provided at a height corresponding to the heat exchanger 40, and upper front panels 153 and 154 provided at upper sides of the lower front panels 151 and 152.

When a horizontal width of the front panel 150 is short, one lower front panel 151 and 152 and one upper front panels 153 and 154 are provided, respectively. Conversely, when the horizontal width of the front panel 150 is long, a plurality of lower front panels 151 and 152 and upper front panels 153 and 154 are provided, respectively.

When a plurality of lower front panels 151 and 152 and upper front panels 153 and 154 are provided, the front panel 150 further includes a front lower middle support 155 provided between the lower front panels 151 and 152 and coupled to the lower front panels 151 and 512, and a front upper middle support 156 provided between the upper front panels 153 and 154 and coupled to the upper front panels 153 and 154.

The suction grill 160 forms an outer appearance of a lower portion of a rear surface of the outdoor unit 10. The suction grill 160 is provided in an upper side of the base fan 100 in a height corresponding to a height of the heat exchanger 40 such that outdoor air may be sucked in the outdoor unit 10.

When a horizontal width of the suction grill 160 is short, one suction grill 160 is provided. When the horizontal width of the suction grill 160 is long, a plurality of suction grills is provided. When a plurality of suction grills 161 and 162 are provided, the suction grill 160 further includes a grill supporter 163 provided between the suction grills 161 and 162 and coupled to the suction grills 162.

Side end coupling parts 165 and 166 coupled to the left panel 120 or the right panel 130 through a coupling member such as a screw are provided in one of left sides and right sides of the suction grills 161 and 162, and a lower end mounting part 167 mounted on an edge of the base fan 100 is provided in a lower side thereof.

The rear panel 170 forms an outer appearance of an upper portion of a rear surface of the outdoor unit 10, and is coupled to the top panel 140.

When a horizontal width of the rear panel 170 is short, one rear panel 170 is provided. When the horizontal width of the rear panel 170 is long, a plurality of rear panels 171 and 172 are provided. When the rear panels 171 and 172 are provided, the rear panel 170 further includes a rear supporter 173 provided between the rear panels 171 and 172 and coupled to the rear panels 171 and 172.

Chassis frames 180 and 190 to which the left panel 120, the right panel 130, the front panel 150, the suction grill 160, and the rear panel 170 are coupled are provided inside the case 90.

The chassis frames 180 and 190 include a front chassis frame 180 longitudinally coupled to a front portion of the left panel 120 and a front portion of the right panel 130 left and right, and a rear chassis frame 190 longitudinally coupled to a rear portion of the left panel 120 and a rear portion of the right panel 130 left and right.

Upper portions of the lower front panels 151 and 152 and the lower middle supporter 155, and lower portions of the upper front panels 153 and 154 and the upper middle supporter 156 are coupled to the front chassis frame 180.

Upper portions of the suction grills 161 and 162 and the grill supporter 163 are coupled to a rear chassis frame 190, and lower portions of the rear panels 171 and 172 and the rear support 173 are coupled to the rear chassis frame 190.

The compressors 22, 24, and 26, the accumulator 27, and the oil separators 28, 29, and 30 are connected to the heat exchanger 40 through the refrigerant pipes 14, 15, and 16 such that the heat exchanger 40 may exchange heat with outdoor air by a refrigerant flowing through the heat exchanger 40.

The compressors 22, 24, and 26 compress the refrigerant, and a plurality of refrigerant passages are connected to each other in parallel in the compressors 22, 24, and 26.

Suction sides of the compressors 22, 24, and 26 are connected to one common accumulator 27, and discharge sides of the compressors 22, 24, and 26 are connected to the oil separators 28, 29, and 30, respectively.

The accumulator 27 stores the refrigerant and supplies the stored refrigerant to the compressors 22, 24, and 26 as needed. The oil separators 28, 29, and 30 separate oil included in the refrigerant for lubrication operation of the compressors 22, 24, and 26.

A front surface of the heat exchanger 40 has a U shape, which is open and the open front surface of the heat exchanger 40 faces the front panel 150. The heat exchanger 40 include a left portion located in a right side of the left panel 120, a rear portion located in a front direction of the suction grill 160, and a right side located in a left side of the right panel 130.

During a cooling operation, the heat exchanger 40 acts as a condenser. During a heating operation and defrosting operation, the heat exchanger 40 acts as an evaporator, and a refrigerant passage through which the refrigerant flows is formed in the heat exchanger 40 such that the refrigerant is heat-exchanged with air introduced in the case 90.

A blower 44 is provided in an upper side of the heat exchanger 40 and blows through outdoor air heat-exchanged with the heat exchanger 40.

The blower 44 is provided between an upper portion of the left panel 120 and an upper portion of the upper front panel 130 and between the upper front panels 153 and 154 and the rear panel 170, and is put and installed on the front chassis frame 180 and the rear chassis frame 190.

The blower 44 includes a blowing fan 48 blowing outdoor air heat-exchanged with the heat exchanger 40 into the discharge hole 142 formed in the top panel 140, a fan motor 46 rotating the blowing fan 48, and a shroud 49 forming a flow passage of the blowing fan 48 to surround the blowing fan 48.

The center of the blowing fan 48 is coupled to the fan motor 46, and a plurality of blades 48a are provided in the blowing fan 48 such that the outdoor air heat-exchanged with the heat exchanger 40 is sucked and blown into the discharge hole 142.

The fan motor 46 is supported by the motor mount 47 coupled to chassis frames 180 and 190.

Both ends of the motor mount 47 are coupled and supported to the front chassis frame 180 and the rear chassis frame 190.

The motor mount 47 includes a first motor mount 41 and a second motor mount 42 supporting both sides of the fan motor 46 while interposing the fan motor 46 therebetween. The first motor mount 41 and the second motor mount 42 are linearly formed to have the same shape and are provided parallel to each other.

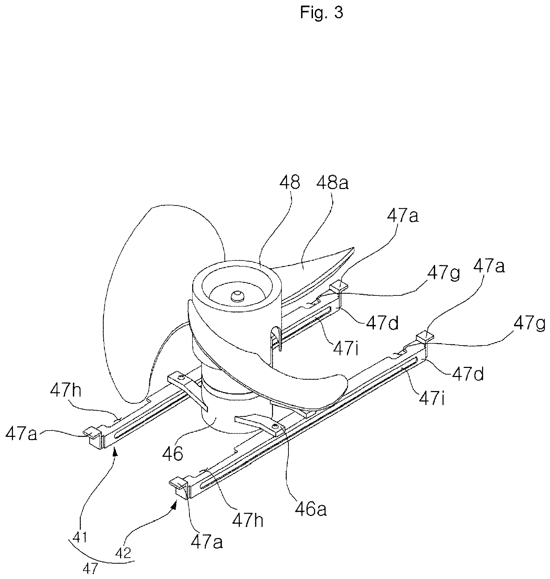

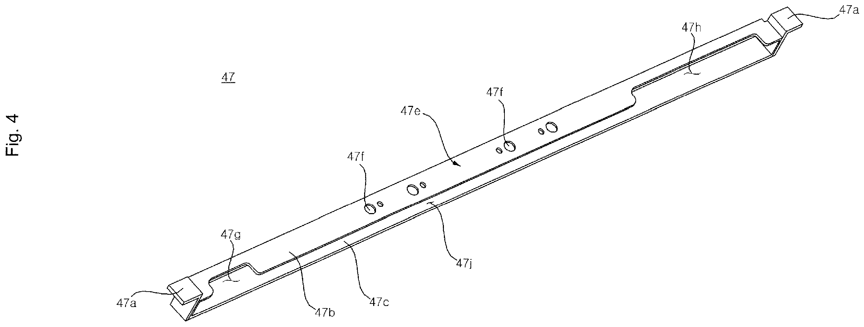

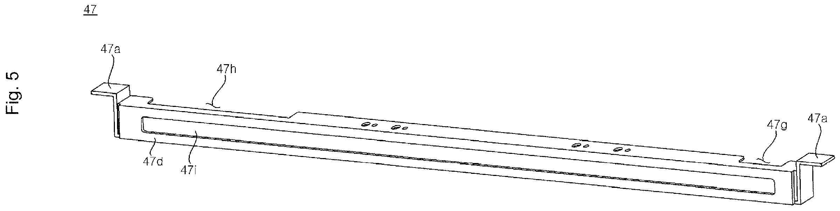

Hereinafter, a motor mount 47 will be described with reference to FIGS. 3 to 7.

FIG. 3 is a view illustrating a blowing fan, a fan motor, and a motor mount shown in FIG. 2, and FIGS. 4 and 5 are views illustrating a motor mount shown in FIG. 3.

Referring to FIGS. 3 to 5, curved parts 47a are curved at both ends of the motor mount 47 so that the curved parts 47a are coupled and supported to the chassis frames 180 and 190, respectively. The curved parts 47a have a '¬' shape to be mounted on upper sides of the chassis frames 180 and 190, a front end of the motor mount 47 may be mounted on the front chassis frame 180 and be coupled through a coupling member and a rear end of the motor mount 47 may be mounted on the rear chassis frame 190 and be coupled through the coupling member.

One surface of a portion of the motor mount 47 except for the curved part 47a is longitudinally open to have a '⊏' shaped section. The motor mount 47 includes a top surface 47b, a bottom surface 47c spaced from the top surface 47b to a lower side, and a side surface 47d connecting one side of the bottom surface 47c to one side of the top surface 47b.

When a plurality of blades 48a are rotated, one open surface of the motor mount 47 becomes an air passage 47j through which air moving by the blades 48a flows.

A side 47d of the first motor mount 41 faces one side of the fan motor 46 so that the air passage 47j formed at the first motor mount 41 is disposed opposite to one side of the fan motor 46. A side 47d of the second motor mount 42 is disposed opposite to an opposite side of the fan motor 46 so that the air passage 47j formed at the second motor mount 42 faces the opposit side of the fan motor 46.

It is preferable that the fan motor 46 is supported to the center of the motor mount 47 so that drooping of the motor mount 47 may be prevented. Accordingly, a coupling part 47e coupling the fan motor 46 to the center of the top surface 47b so that the fan motor 36 may be supported to the center of the top surface 47b.

Ribs 46a may be provided in both sides of the fan motor 46 to be mounted and coupled to the coupling part 46e.

A plurality of coupling holes 47f are formed in the coupling part 47e so that the coupling part 47e may be coupled with the ribs 46a of the fan motor 46 through a coupling member. The coupling hole 47f is not formed in the coupling part 47e but a coupling protrusion may be formed in the coupling part 47e, in which is inserted into and coupled to the rib 46a of the fan motor 46.

When the blowing fan 48 is rotated, the motor mount 47 is provided in a location which the blades 48a passes through the motor mount 47 while overlapping with the motor mount 47. Accordingly, when the blowing fan 48 roates, air at a lower side of the motor mount 47 flow to a plurality of blades 48a upward, and collides with the motor mount 47 so that a fan noise may occur.

To reduce the fan noise, the top surface 47b of the motor mount 47 is cut such the cut parts 47g and 47h are formed. The cut parts 47g and 47h may be formed by cutting at least a part of the top surface 47b, which is a surface passing through the motor mount 47 while the blades 48a are rotated.

The cut parts 47g and 47h extend from the air passage 47j. Accordingly, air flowing through the air passage 47j is discharged through the cut parts 47g and 47h by rotating the blades 48a.

The cut parts 47g and 47h are formed in both sides of the coupling part 47e. The cut parts 47g and 47h have different lengths. That is, the cut parts 47g and 47h include a first cut part 47g formed in one side of the coupling part 47e and having a shorter length, and a second cut part 47h formed at an opposite side of the coupling part 47e and having a longer length.

The first cut part 47g formed in the first motor mount 41 and the second cut part 47h formed in the second motor mount 42 are provided diagonally with respect to the axis of the fan motor 46. The second cut part 47h formed in the first motor mount 41 and the first cut part 47g formed in the second motor mount 42 are provided diagonally with respect to the axis of the fan motor 46.

The blowing fan 48 is rotated clockwise above the motor mount 47 in the drawings. Accordingly, because air moving by the blades 48a flows in a rotating direction of the blades and collides with the motor mount 47, the second cut part 47h being a collided part of the moving air is formed longer so that fan noise may be reduced. Since the sizes of the blades 48a are changed according to a specification of an outdoor unit, the second cut part 47h is longer than the first cut part 47g, so that the motor mount 47 may be used in outdoor units of various specifications in common.

However, when the cut parts 47g and 47h are formed in the motor mount 47, strength of the motor mount 47 is deteriorated so that drooping by a self way of the blower 44 may occur or distortion may be occur by rotation of the blowing fan 48.

Accordingly, there is a need to secure strength of the motor mount 47. A strength reinforcing part 47i is provided in the motor mount 47 and provides strength to the side surface 47d. When viewed from an outer side of the side surface 47d, the strength reinforcing part 47i is depressed in an inner side. When viewed from an inner side of the side surface 47d, the strength reinforcing part 47i protrudes. The strength reinforcing part 47i may protrude to an outer side of the side surface 47d and an inner side of the side surface 47d may be depressed. The strength reinforcing part 47i may be provided in a bottom surface 47c of the motor mount 47 or in both of the side surface 47d and the bottom surface 47c.

One stiff reinforcing part 47i is longitudinally formed from a location corresponding to the first cut part 47g to a location corresponding to the second cut part 47h. One strength reinforcing part 47i may be formed in a location corresponding to the first cut part 47g or in a location corresponding to the second cut part 47h. It is preferable that the strength reinforcing part 47i is formed longer than the cut parts 47g and 47h to secure sufficient strength of the motor mount 47.

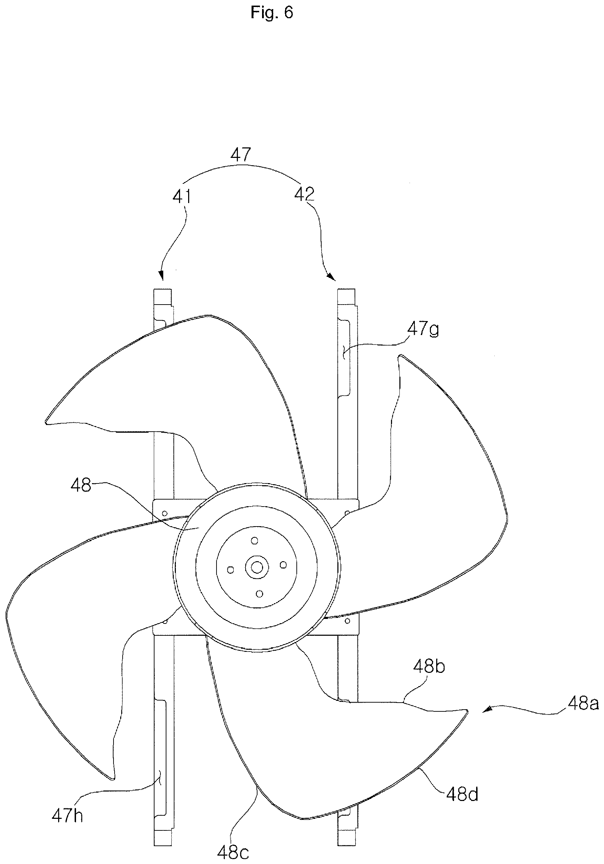

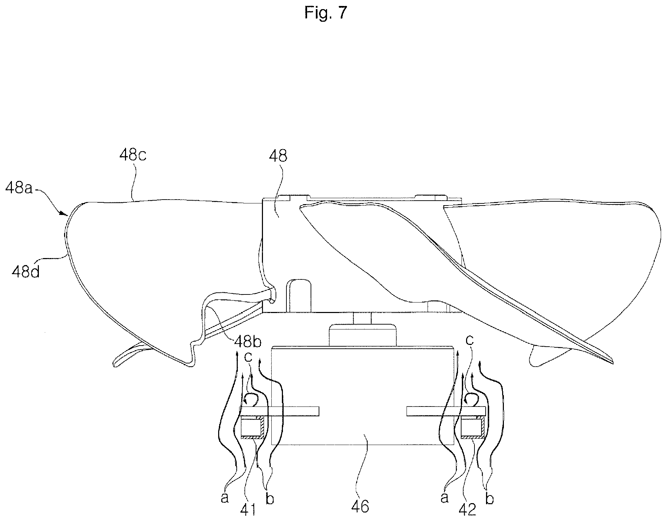

FIG. 6 is a plan view illustrating another example of a blowing fan shown in FIG. 3, and FIG. 7 is a front view of FIG. 6.

Referring to FIGS. 6 and 7, it is undertood that there is a difference between FIGS. 6 and 7 and FIG. 3.

That is, three blades 48a are formed at the blowing fan 48 in FIG. 3, whereas four blades 48a are formed at the blowing fan 48 in FIGS. 6 and 7. The number of the blades 48a is not limited thereto. That is, two, five or more blades 40a may be provided at regular intervals in a rotating direction of the blowing fan 48. FIGS. 6 and 7 have substantially the same configuration as that of FIG. 3. The difference is that four blades 48a are provided at the blowing fan 48.

The blade 48a includes a first edge 48b being a front end of the rotating direction, a second edge 48c being a rear edn of the rotating direction, and a first edge 48d connecting the second edge 48c to the first edge 48b.

When the blowing fan 48 rotates, the first edge 48b, the second edge 48c, and the third edge 48d are parts which have great pressure difference with peripheral air and cause fan noise. Particularly, when the blowing fan 48, the third edge 48d is a part having the highest flow rate of the air, the largest amount of fan noise occurs at a crossing point of the first edge 48b and the third edge 48d.

Further, when the blowing fan 48 rotates, air at a lower side of the motor mount 47 is moved upward through the plurality of blades 48a. the motor mount 47 functions as a resistor blocking flow of air moved upward, and vertex c is formed at an upper side of the motor mount 47. Accordingly, when the blade 48a passes through the upper side of the motor mount 47, the air makes contact with the vertex c such that noise may be further increased.

Arrows shown in FIG. 7 indicate flow of air at a lower side of the motor mount 47 moving toward the blade 48a upward when the blowing fan 48 rotates. A first flow a indicates flow of air which starts from a lower side of the motor mount 47, passes through one side of the motor mount 47, and is moved to the blade 48a through the cut parts 47g and 47h. A second flow b indicates flow of air which starts from the lower side of the motor mount 47, passes through another side of the motor mount 47, and is moved to the blade 48a. The vertex c is formed at an upper side of the motor mount 47 by the first flow a and the second flow b.

If the cut parts 47g and 47h are not formed at the motor mount 47, a form of the first flow a is similar to a form of the second flow b. In this case, since an interval between the first flow a and the second flow b become wide at an upper side of the motor mount 47, a formation region of the vertex c becomes wide which results in the increase in the noise. However, since the cut parts 47g and 47h are formed at the motor mount 47 in the embodiment, an interval between the first flow a and the second flow b becomer narrow. Accordingy, the formation region of the vertex c becomes narrow so that the noise can be reduced.

As described above, in the air conditioner according to the present invention, the cut parts 47g and 47h are provided in the motor mount 47 so that the noise of the blowing fan 48 is reduced.

Further, since the strength reinforcing part 47i is provided in the motor mount 47, the drooping and distortion of the motor mount 47 due to the cut parts 47g and 47h are prevented so that strength of the motor mount 47 is improved.

In the air conditioner according to the present invention, cut parts are provided in the motor mount so that a noise in the blowing fan is reduced.

Further, because the strength reinforcing part is provided in the motor mount, drooping and distortion of the motor mount due to the cut parts are prevented so that strength of the motor mount is improved.

Effects of the present invention are not limited to the foregoing effects, and other effects which are not described may be clearly understood by those skilled in the art from following claims.

## Claims

1. An air conditioner, comprising:
a blowing fan (48) comprising a plurality of blades (48a);
a fan motor (46) for rotating the blowing fan (48) and comprising ribs (46a); and
a motor mount (47) supporting the fan motor (46),
wherein a first cut part (47g) and a second cut part (47h) are formed in the motor mount (47),
wherein the motor mount (47) includes
a top surface (47b) that faces a plane of rotation of the blowing fan (48),
a bottom surface (47c) spaced from the top surface (47b),
a side surface (47d) connecting one side of the bottom surface (47c) to one side of the top surface (47b),
an air passage (47j) forming one open surface of the motor mount (47), a coupling part (47e) coupling the fan motor (46), formed in the top surface (47b),
a plurality of coupling holes (47f) formed in the coupling part (47e), coupled with the ribs of the fan motor through a coupling member,
the first cut part (47g) being formed in the top surface (47b) by cutting, and being formed at one side of the plurality coupling holes (47f),
the second cut part (47h) being formed in the top surface (47b) by cutting, and being formed at the opposite side of the plurality coupling holes (47f),
wherein the first cut part (47g) and the second cut part (47h) extend from the air passage (47j), and air flowing through the air passage (47) is discharged through the first cut part (47g) and second cut part (47h),
wherein the second cut part (47h) is longer than the first cut part (47g).

2. The air conditioner of claim 1, wherein, when viewed along a rotational axis of the blowing fan (48), an areal surface of rotation of the blowing fan (48) overlaps with at least a part of the first cut part (47g) and the second cut part (47h).

3. The air conditioner of any one of claims 1 to 2, wherein the motor mount (47) includes a first motor mount (41) and a second motor mount (42) supporting the fan motor (46) on two sides thereof, respectively.

4. The air conditioner of claim 3, wherein the first motor mount (41) and the second motor mount (42) are provided parallel to each other.

5. The air conditioner of claim 3 or 4, wherein the first cut part (47g) formed in the first motor mount (41) and the second cut part (47h) formed in the second motor mount (42) are provided diagonally with respect to an axis of the fan motor (46), and wherein the second cut part (47h) formed in the first motor mount (41) and the first cut part (47g) formed in the second motor mount (42) are provided diagonally with respect to the axis of the fan motor (46).

6. The air conditioner of claim 1, wherein the air passage (47j) formed at the first motor mount (41) is disposed opposite to one side of the fan motor (46), and the air passage (471) formed at the second motor mount (42) faces the opposite side of the fan motor (46).

7. The air conditioner of any one of claims 1 to 6, further comprising a chassis frame (180, 190) supporting both ends of the motor mount (47) and curved parts (47a) are formed at both ends of the motor mount (47), wherein the curved parts (47a) are coupled and supported by the chassis frame (180, 190).

8. The air conditioner of any one of claims 1 to 6, wherein at least one strength reinforcing part (47i) in the form of a protrusion or indentation is provided in at least one surface of the motor mount (47)

9. The air conditioner of claim 8, wherein a length of the at least one strength reinforcing part (471) is equal to or greater than a length of the first cut part (47g) and the second cut part (47h).

10. The air conditioner of claim 8 or 9, wherein the at least one strength reinforcing part (47i) is provided in the side surface (47d), in the bottom surface (47c), or in both the side surface (470) and the bottom surface (47c) of the motor mount (47).

11. The air conditioner of claim8, 9 or 10, wherein the at least one strength reinforcing part (471) extends from the first cut out part (47g) to the second cut out part (47h).

## Patentansprüche

1. Klimaanlage, die aufweist:
einen Gebläselüfter (48) mit mehreren Schaufeln (48a);
einen Lüftermotor (46) zum Drehen des Gebläselüfters (48) und mit Rippen (46a);
und
eine Motorhalterung (47), die den Lüftermotor (46) lagert,
wobei ein erster Ausschnitt (47g) und ein zweiter Ausschnitt (47h) in der Motorhalterung (47) gebildet sind,
wobei die Motorhalterung (47) aufweist:
eine Kopffläche (47b), die zu einer Drehebene des Gebläselüfters (48) weist,
eine Bodenfläche (47c), die von der Kopffläche (47b) beabstandet ist,
eine Seitenfläche (47d), die eine Seite der Bodenfläche (47c) mit einer Seite der Kopffläche (47b) verbindet,
einen Luftkanal (47j), der eine offene Oberfläche der Motorhalterung (47) bildet,
wobei ein Koppelteil (47e), das den Lüftermotor (46) koppelt, in der Kopffläche (47b) gebildet ist,
mehrere Koppellöcher (47f), die im Koppelteil (47e) gebildet und mit den Rippen des Lüftermotors über ein Koppelelement gekoppelt sind,
wobei der erste Ausschnitt (47g) in der Kopffläche (47b) durch Schneiden gebildet ist und an einer Seite der mehreren Koppellöcher (47f) gebildet ist,
wobei der zweite Ausschnitt (47h) in der Kopffläche (47b) durch Schneiden gebildet ist und an der Gegenseite der mehreren Koppellöcher (47f) gebildet ist,
wobei sich der erste Ausschnitt (47g) und der zweite Ausschnitt (47h) vom Luftkanal (47j) erstrecken und den Luftkanal (47) durchströmende Luft über den ersten Ausschnitt (47g) und den zweiten Ausschnitt (47h) abgegeben wird,
wobei der zweite Ausschnitt (47h) länger als der erste Ausschnitt (47g) ist.

2. Klimaanlage nach Anspruch 1, wobei sich mit Blick entlang einer Drehachse des Gebläselüfters (48) eine Drehfläche des Gebläselüfters (48) mit mindestens einem Teil des ersten Ausschnitts (47g) und des zweiten Ausschnitts (47h) überlappt.

3. Klimaanlage nach Anspruch 1 oder 2, wobei die Motorhalterung (47) eine erste Motorhalterung (41) und eine zweite Motorhalterung (42) aufweist, die jeweils den Lüftermotor (46) auf zwei Seiten davon lagern.

4. Klimaanlage nach Anspruch 3, wobei die erste Motorhalterung (41) und die zweite Motorhalterung (42) parallel zueinander vorgesehen sind.

5. Klimaanlage nach Anspruch 3 oder 4, wobei der erste Ausschnitt (47g), der in der ersten Motorhalterung (41) gebildet ist, und der zweite Ausschnitt (47h), der in der zweiten Motorhalterung (42) gebildet ist, im Hinblick auf eine Achse des Lüftermotors (46) diagonal vorgesehen sind und wobei der zweite Ausschnitt (47h), der in der ersten Motorhalterung (41) gebildet ist, und der erste Ausschnitt (47g), der in der zweiten Motorhalterung (42) gebildet ist, im Hinblick auf die Achse des Lüftermotors (46) diagonal vorgesehen sind.

6. Klimaanlage nach Anspruch 1, wobei der Luftkanal (47j), der an der ersten Motorhalterung (41) gebildet ist, entgegengesetzt zu einer Seite des Lüftermotors (46) angeordnet ist und der Luftkanal (47j), der an der zweiten Motorhalterung (42) gebildet ist, zur Gegenseite des Lüftermotors (46) weist.

7. Klimaanlage nach einem der Ansprüche 1 bis 6, ferner mit einem Chassisrahmen (180, 190), der beide Enden der Motorhalterung (47) lagert, und gekrümmte Teile (47a) an beiden Enden der Motorhalterung (47) gebildet sind, wobei die gekrümmten Teile (47a) durch den Chassisrahmen (180, 190) gekoppelt und gelagert sind.

8. Klimaanlage nach einem der Ansprüche 1 bis 6, wobei mindestens ein Festigkeitsverstärkungsteil (47i) in Form eines Vorsprungs oder einer Vertiefung in mindestens einer Oberfläche der Motorhalterung (47) vorgesehen ist.

9. Klimaanlage nach Anspruch 8, wobei eine Länge des mindestens einen Festigkeitsverstärkungsteils (47i) gleich oder größer als eine Länge des ersten Ausschnitts (47g) und des zweiten Ausschnitts (47h) ist.

10. Klimaanlage nach Anspruch 8 oder 9, wobei das mindestens eine Festigkeitsverstärkungsteil (47i) in der Seitenfläche (47d), in der Bodenfläche (47c) oder sowohl in der Seitenfläche (470) als auch der Bodenfläche (47c) der Motorhalterung (47) vorgesehen ist.

11. Klimaanlage nach Anspruch 8, 9 oder 10, wobei sich das mindestens eine Festigkeitsverstärkungsteil (47i) vom ersten Ausschnitt (47g) zum zweiten Ausschnitt (47h) erstreckt.

## Revendications

1. Climatiseur, comprenant :
un ventilateur soufflant (48) comprenant une pluralité de pales (48a) ;
un moteur de ventilateur (46) pour faire tourner le ventilateur soufflant (48) et
comprenant des nervures (46a) ; et
un support de moteur (47) portant le moteur de ventilateur (46),
dans lequel une première partie coupée (47g) et une seconde partie coupée (47h) sont formées dans le support de moteur (47),
dans lequel le support de moteur (47) comprend
une surface supérieure (47b) qui fait face à un plan de rotation du ventilateur soufflant (48),
une surface inférieure (47c) espacée de la surface supérieure (47b),
une surface latérale (47d) reliant un côté de la surface inférieure (47c) à un côté de la surface supérieure (47b),
un passage d'air (47j) formant une surface ouverte du support de moteur (47), une partie d'accouplement (47e) accouplant le moteur de ventilateur (46), formée dans la surface supérieure (47b),
une pluralité de trous d'accouplement (47f) formés dans la partie d'accouplement (47e), accouplée aux nervures du moteur de ventilateur par l'intermédiaire d'un élément d'accouplement,
la première partie coupée (47g) étant formée dans la surface supérieure (47b) par découpe, et étant formée au niveau d'un côté de la pluralité de trous d'accouplement (47f),
la seconde partie coupée (47h) étant formée dans la surface supérieure (47b) par découpe, et étant formée au niveau du côté opposé de la pluralité de trous d'accouplement (47f),
dans lequel la première partie coupée (47g) et la seconde partie coupée (47h) s'étendent à partir du passage d'air (47j), et de l'air circulant à travers le passage d'air (47) est évacué à travers la première partie coupée (47g) et la seconde partie coupée (47h),
dans lequel la seconde partie coupée (47h) est plus longue que la première partie coupée (47g).

2. Climatiseur selon la revendication 1, dans lequel, lorsqu'il est vu le long d'un axe de rotation du ventilateur soufflant (48), une surface de rotation aréale du ventilateur soufflant (48) chevauche au moins une partie de la première partie coupée (47g) et de la seconde partie coupée (47h).

3. Climatiseur selon l'une quelconque des revendications 1 et 2, dans lequel le support de moteur (47) comprend un premier support de moteur (41) et un second support de moteur (42) portant le moteur de ventilateur (46) sur deux côtés de celui-ci, respectivement.

4. Climatiseur selon la revendication 3, dans lequel le premier support de moteur (41) et le second support de moteur (42) sont fournis parallèlement l'un à l'autre.

5. Climatiseur selon la revendication 3 ou 4, dans lequel la première partie coupée (47g) formée dans le premier support de moteur (41) et la seconde partie coupée (47h) formée dans le second support de moteur (42) sont fournies en diagonale par rapport à un axe du moteur de ventilateur (46), et dans lequel la seconde partie coupée (47h) formée dans le premier support de moteur (41) et la première partie coupée (47g) formée dans le second support de moteur (42) sont fournies en diagonale par rapport à l'axe du moteur de ventilateur (46).

6. Climatiseur selon la revendication 1, dans lequel le passage d'air (47j) formé au niveau du premier support de moteur (41) est disposé à l'opposé d'un côté du moteur de ventilateur (46), et le passage d'air (47j) formé au niveau du second support de moteur (42) fait face au côté opposé du moteur de ventilateur (46).

7. Climatiseur selon l'une quelconque des revendications 1 à 6, comprenant en outre un cadre de châssis (180, 190) portant les deux extrémités du support de moteur (47) et des parties incurvées (47a) sont formées aux deux extrémités du support de moteur (47), dans lequel les parties incurvées (47a) sont accouplées et portées par le cadre de châssis (180, 190).

8. Climatiseur selon l'une quelconque des revendications 1 à 6, dans lequel au moins une partie de renforcement de résistance (47i) sous la forme d'une saillie ou d'une indentation est fournie dans au moins une surface du support de moteur (47).

9. Climatiseur selon la revendication 8, dans lequel une longueur de l'au moins une partie de renforcement de résistance (47i) est égale à ou plus grande qu'une longueur de la première partie coupée (47g) et de la seconde partie coupée (47h).

10. Climatiseur selon la revendication 8 ou 9, dans lequel l'au moins une partie de renforcement de résistance (47i) est fournie dans la surface latérale (47d), dans la surface inférieure (47c), ou dans à la fois la surface latérale (470) et la surface inférieure (47c) du support de moteur (47).

11. Climatiseur selon la revendication 8, 9 ou 10, dans lequel l'au moins une partie de renforcement de résistance (47i) s'étend à partir de la première partie découpée (47g) jusqu'à la seconde partie découpée (47h).
